# EUROPÄISCHE PATENTSCHRIFT

(11) **EP 0 386 191 B1**
(45) Veröffentlichungstag und Bekanntmachung des Hinweises auf die Patenterteilung: **03.11.1993**
(21) Anmeldenummer: 89908685.4
(22) Anmeldetag: 08.08.1989
(51) Int. Cl.: F16K 15/14

(54) **VORRICHTUNG ZUR VERBINDUNG VON MINDESTENS ZWEI ZULEITUNGEN MIT EINER GEMEINSAMEN ABLEITUNG**
DEVICE FOR CONNECTING AT LEAST TWO SUPPLY PIPES WITH A COMMON DRAINAGE PIPE
DISPOSITIF DE LIAISON D'AU MOINS DEUX CONDUITES D'AMENEE PAR UNE DESCENTE COMMUNE

(30) Priorität: 05.09.1988 CH 3312/88
(43) Veröffentlichungstag der Anmeldung: 12.09.1990
(73) Patentinhaber: Mettler-Toledo AG, 8606 Greifensee (CH)
(72) Erfinder: BRINKMANN, Heinz, Jürgen, CH-8952 Schlieren (CH); ZIMMERMANN, Robert, Karl, CH-6330 Cham (CH)
(74) Vertreter: Schmauder, Klaus Dieter
(86) Internationale Anmeldenummer: CH8900145
(87) Internationale Veröffentlichungsnummer: WO9002898

(56) Entgegenhaltungen:
- DE-C- 844 038
- DK-A- 34
- FR-A- 1 017 649
- FR-A- 1 139 642
- US-A- 1 860 163
- US-A- 3 865 133

## Beschreibung

Die Erfindung betrifft eine Vorrichtung gemäss Oberbegriff des Anspruches 1.

Vorrichtungen der eingangs genannnten Art sind bekannt, jedoch muss für jede Zuleitung ein gesondertes Rückschlagventil verwendet werden, das beispielsweise aus Kugeln oder Stiften besteht, die mit einer Feder gegen einen Sitz gedrückt werden. Solche Vorrichtungen sind relativ kompliziert und teuer.

Aufgabe der Erfindung ist es, eine Vorrichtung der eingangs genannten Art so auszubilden, dass sie besonders einfach ist und kostengünstig hergestellt werden kann.

Die Aufgabe wird erfindungsgemäss durch die kennzeichnenden Merkmale des Anspruches 1 gelöst.

Dadurch, dass für mindestens zwei Zuleitungen ein gemeinsamer elastischer, die Mündungen der Zuleitungen verschliessender Dichtring als Rückschlagventilglied verwendet wird, ergibt sich eine besonders einfache Vorrichtung, die überdies kostengünstig hergestellt werden kann.

Vorteilhafte Ausgestaltungen der Vorrichtungen sind in den Ansprüchen 2 bis 9 beschrieben.

Eine besonders einfache Lösung der Vorrichtung beschreibt Anspruch 2. Dabei können grundsätzlich Dichtringe verschiedener Querschnitte, beispielsweise mit dreieckförmigem Querschnitt verwendet werden, vorteilhaft ist jedoch eine Ausgestaltung nach Anspruch 3.

Auch die Ausbildung der Kammern kann beliebig sein, wobei jedoch eine Ausbildung nach Anspruch 4 eine sehr einfache Herstellung ermöglicht.

Der Anspruch 5 beschreibt eine Ausbildungsvariante des Einsatzkörpers, wobei jedoch die Ausbildung nach Anspruch 6 bevorzugt ist.

Auch bezüglich der Aussenform des zweiten Gehäuseteils ergeben sich verschiedene Ausgestaltungen zum Beispiel nach Anspruch 8. Vorteilhafter ist jedoch eine Ausbildung nach Anspruch 7, wobei für jede Zuleitung eine Prismenfläche vorgesehen sein kann.

Eine besonders wirtschaftliche Weiterbildung der Vorrichtung ergibt sich nach Anspruch 9, da für alle Anordnungen die gleichen Bauteile verwendet werden können.

Ausführungsbeispiele der erfindungsgemässen Vorrichtung werden nachfolgend anhand der Zeichnungen näher beschrieben, dabei zeigen:
- Figur 1: die Vorrichtung in Draufsicht und teilweise geschnitten;
- Figur 2: die Vorrichtung der Figur 1 im Schnitt II-II der Figur 1;
- Figur 3: die Vorrichtung mit einer zweifachen Anordnung von Zuleitungen und Ableitungen in Draufsicht und teilweise geschnitten; und
- Figur 4: die Vorrichtung nach Figur 3 im Schnitt IV-IV der Figur 3.

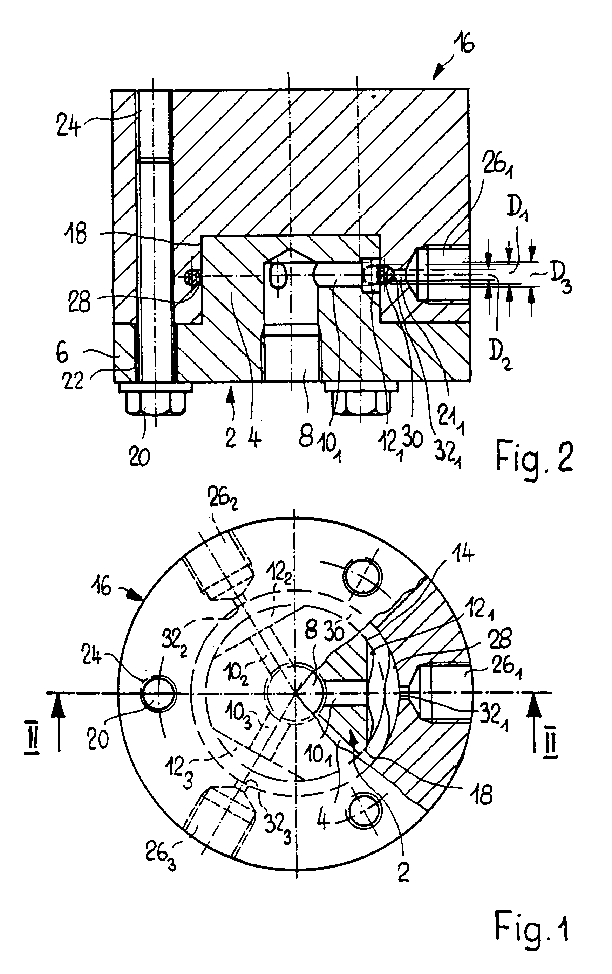

Die Vorrichtung der Figuren 1 und 2 enthält eine Anordnung von 3 Zuleitungen, die auf eine gemeinsame Ableitung wirken und besitzt einen ersten Gehäuseteil 2, mit einem zylindrischen Einsatzkörper 4 und einem Flansch 6. Im zylindrischen Einsatzkörper ist koaxial eine Ableitung 8 in Form einer Sackbohrung angeordnet. Von dieser Ableitung gehen radiale Verbindungskanäle 10₁,10₂,10₃ zu am Umfang des Einsatzkörpers 4 angeordneten Kammern 12₁,12₂,12₃. Diese Kammern sind durch zylinderabschnittförmige Ausnehmungen gebildet, deren in Umfangsrichtung liegende Kanten 14 abgerundet sind.

Die Vorrichtung enthält einen zweiten Gehäuseteil 16 mit einer zylindrischen Ausnehmung 18, die am zylindrischen Einsatzkörper 4 anliegt. Die Gehäuseteile 2,16 sind mittels Schrauben 20 verschraubt, die durch Bohrungen 22 im Flansch 6 des ersten Gehäuseteiles 16 eingeschraubt sind. Im zweiten Gehäuseteil 16 sind Zuleitungen 26₁,26₂,26₃ angeordnet, die jeweils gegen eine Kammer 12₁,12₂,12₃ im Einsatzkörper 4 münden. Ferner ist in der Ausnehmung 18 des zweiten Gehäuseteils eine Ringnut 28 angeordnet, in der ein als O-Ring ausgebildeter Dichtring 30 liegt, der die Mündungen 32₁,32₂,32₃ der Zuleitungen verschliesst und für alle Zuleitungen als gemeinsames Rückschlagventilglied dient. Gleichzeitig dient der Dichtring 30 auch zur Abdichtung der Zuleitungen 26₁,26₂,26₃ gegeneinander. Die Dimension D₁ des Dichtringes 30 in Achsrichtung des Einsatzkörpers 4 ist grösser als die Dimension D₂ der Mündungen 32₁,32₂,32₃ der Zuleitungen 26₁,26₂,26₃ jedoch kleiner als die entsprechende Dimension D₃ der Verbindungskanäle 10₁,10₂,10₃.

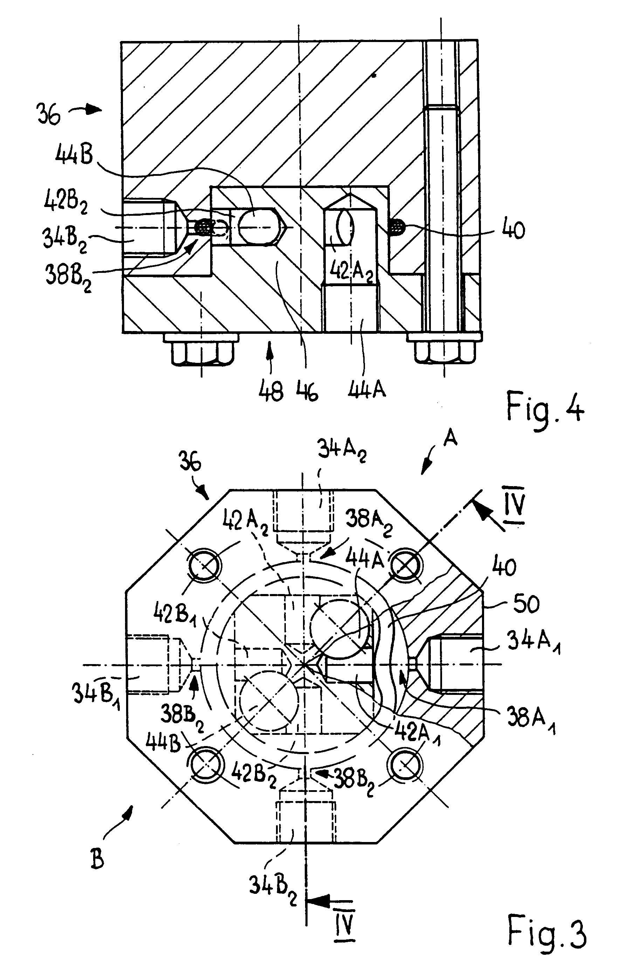

Der Dichtring 30 verschliesst im Ruhezustand die Mündungen 32₁,32₂,32₃ der Zuleitungen 26₁,26₂,26₃, sodass ein Durchfluss von diesen Zuleitungen gegen die Ableitung 8 gesperrt ist. Tritt in einer der Zuleitungen 26₁ ein Druck auf, so wie es in Figur 3 gezeigt ist, so wird der Dichtring 30 in die zugehörige Kammer 12₁ ausgelenkt und gibt den Durchfluss des Mediums, das beispielsweise Gas oder eine Flüssigkeit sein kann, in den Verbindungskanal 10₁ und damit in die Ableitung 8 frei.

Die Figuren 3 und 4 zeigen eine weitere Vorrichtung, die grundsätzlich so aufgebaut ist, wie jene der Figuren 1 und 2, sodass auf die obigen Ausführungen verwiesen wird. Im Gegensatz zur Ausbildung der Figuren 1 und 2 enthält jene der Figuren 3 und 4 zwei Anordnungen A und B von jeweils zwei Zuleitungen 34A₁,34A₂, und 34B₁,34B₂, die im zweiten Gehäuseteil 36 angeordnet sind und jeweils über Rückschlagventile 38A₁,38A₂,38B₁,38B₂ mit dem gemeinsamen, als Rückschlagventilglied wirkenden Dichtring 40 und Verbindungskanälen 42A₁,42A₂,42B₁,42B₂ mit zugeordneten Ableitungen 44A,44B im Einsatzkörper 46 des ersten Gehäuseteils 48 zusammenwirken. Eine solche Vorrichtung kann beispielsweise dazu dienen, die Ableitungen 44A,44B erst in einem Reaktionsgefäss zusammenzuführen, um vorher die Mischung unverträglicher Flüssigkeiten, Gele, Gase etc. zu verhindern.

Der Umfang des zweiten Gehäuseteils 36 ist prismatisch ausgebildet, wobei die Zuleitungen an den Prismenflächen 50 münden, wodurch insbesondere das Abdichten von Anschlussleitungen vereinfacht ist.

In weiterer Ausbildung der Vorrichtung könnte auch der Einsatzkörper in nicht dargestellter Weise einen prismatischen Umfang haben und in eine entsprechend gestaltete Ausnehmung im zweiten Gehäuseteil eingreifen.

### BEZUGSZEICHENLISTE

- A: erste Anordnung von Zuleitungen und Ableitung
- B: zweite Anordnung von Zuleitungen und Ableitung
- D₁: Dimension von 30
- D₂: Dimension von 32₁, 32₂, 32₃
- D₃: Dimension von 10₁, 10₂, 10₃
- 2: erster Gehäuseteil
- 4: Einsatzkörper
- 6: Flansch
- 8: Ableitung
- 10₁: Verbindungskanal
- 10₂: Verbindungskanal
- 10₃: Verbindungskanal
- 12₁: Kammer
- 12₂: Kammer
- 12₃: Kammer
- 14: Kante
- 16: zweiter Gehäuseteil
- 18: Ausnehmung
- 20: Schraube
- 22: Bohrung
- 24: Gewindebohrung
- 26₁: Zuleitung
- 26₂: Zuleitung
- 26₃: Zuleitung
- 28: Ringnut
- 30: Dichtung
- 32₁: Mündung
- 32₂: Mündung
- 32₃: Mündung
- 34A₁: Zuleitung
- 34A₂: Zuleitung
- 34B₁: Zuleitung
- 34B₂: Zuleitung
- 36: zweiter Gehäuseteil
- 38A₁: Rückschlagventil
- 38A₂: Rückschlagventil
- 38B₁: Rückschlagventil
- 38B₂: Rückschlagventil
- 40: Dichtring
- 42A₁: Verbindungskanal
- 42A₂: Verbindungskanal
- 42B₁: Verbindungskanal
- 42B₂: Verbindungskanal
- 44A: Ableitung
- 44B: Ableitung
- 46: Einsatzkörper
- 48: erster Gehäuseteil
- 50: Prismenfläche

## Patentansprüche

1. Vorrichtung mit mindestens einer Anordnung zur Verbindung von mindestens zwei je ein Rückschlagventil enthaltenden Zuleitungen mit einer gemeinsamen Ableitung, dadurch gekennzeichnet, dass die Ableitung (8,44A, 44B) in einem Einsatzkörper (4,46) eines ersten Gehäuseteiles (2,48) angeordnet ist und für jede Zuleitung (26₁,26₂,26₃,34A₁,34A₂,34B₁,34B₂) über einen Verbindungskanal (10₁,10₂,10₃,42A₁,42A₂,42B₁,42B₂) mit einer Kammer (12₁,12₂,12₃) am Umfang des Einsatzkörpers (4,46) in Verbindung steht, wobei am Umfang des Einsatzkörpers (4,46) ein zweiter Gehäuseteil (16,36) mit einer Ausnehmung (18) anliegt, in den gegen jede Kammer (12₁,12₂,12₃) gerichtete Zuleitungen (26₁,26₂,26₃,34A₁,34A₂,34B₁,34B₂) münden, wobei ferner in einer Ringnut (28) am Umfang des Einsatzkörpers (4,46) oder in der Ausnehmung (18) im zweiten Gehäuseteil (16,36) ein elastischer, als Rückschlagventilglied dienender, die Mündungen (32₁,32₂,32₃,) der Zuleitungen (26₁,26₂,26₃,34A₁,34A₂,34B₁,34B₂) verschliessender Dichtring (30,40) angeordnet ist, der unter Druck in der Zuleitung (26₁,26₂,26₃) den Durchfluss zum entsprechenden Verbindungskanal (10₁,10₂,10₃,42A₁,42A₂,42B₁,42B₂) freigebend in die zugehörige Kammer (12₁,12₂,12₃) verdrängbar ist.

2. Vorrichtung nach Anspruch 1, dadurch gekennzeichnet, dass die Dimensionen (D₁) des Dichtringes (30,40) in Achsrichtung des Einsatzkörpers (4,46) grösser ist als die entsprechende Dimension (D₂) der Mündung (32₁,32₂,32₃) der Zuleitung (26₁,26₂,26₃,34A₁,34A₂,34B₁,34B₂) jedoch kleiner als die entsprechende Dimension (D₃) des Verbindungskanals (10₁,10₂,10₃,42A₁,42A₂,42B₁,42B₂).

3. Vorrichtung nach Anspruch 1 oder 2, dadurch gekennzeichnet, dass der Dichtring (30,40) ein O-Ring ist.

4. Vorrichtung nach einem der Ansprüche 1 bis 3, dadurch gekennzeichnet, dass jede Kammer (12₁,12₂,12₃) durch eine Ausnehmung im Einsatzkörper (4,46) gebildet ist, deren Kanten (14) in Umfangsrichtung vorzugsweise abgerundet sind.

5. Vorrichtung nach einem der Ansprüche 1 bis 4, dadurch gekennzeichnet, dass der Einsatzkörper einen prismatischen Querschnitt aufweist und mit einer entsprechend prismatischen Ausnehmung im zweiten Gehäuseteil zusammenwirkt.

6. Vorrichtung nach einem der Ansprüche 1 bis 4, dadurch gekennzeichnet, dass der Einsatzkörper (4,46) einen kreisförmigen Querschnitt aufweist und mit einer entsprechend zylindrischen Ausnehmung (18) im zweiten Gehäuseteil (16,36) zusammenwirkt.

7. Vorrichtung nach einem der Ansprüche 1 bis 6, dadurch gekennzeichnet, dass der zweite Gehäuseteil (36) einen prismatischen Umfang aufweist.

8. Vorrichtung nach einem der Ansprüche 1 bis 6, dadurch gekennzeichnet, dass der zweite Gehäuseteil (16) einen zylindrischen Umfang aufweist.

9. Vorrichtung nach einem der Ansprüche 1 bis 8, dadurch gekennzeichnet, dass in dem Gehäuse (36,48) mindestens eine zweite Anordnung (A,B) zur Verbindung von mindestens zwei je ein Rückschlagventil (38A₁,38A₂,38B₁,38B₂) enthaltenden Zuleitungen (34A₁,34A₂,34B₁,34B₂) mit einer gemeinsamen Ableitung (44A,44B) vorhanden ist, wobei der Dichtring (40) auch für die zweite Anordnung als Rückschlagventilkörper dient.

## Claims

1. Apparatus having at least one arrangement for connecting at least two inlets, each containing a non-return valve, to a common outlet, characterised in that the outlet (8,44A,44B) is arranged in an insert (4,46) of a first housing part (2,48) and each inlet (26₁,26₂,26₃,34A₁,34A₂,34B₁,34B₂) is connected via a connecting channel (10₁,10₂,10₃,42A₁,42A₂,42B₁,42B₂) to a chamber (12₁,12₂,12₃) on the circumference of the insert (4,46), whilst abutting on the circumference of the insert (4,46) is a second housing part (16,36) with a recess (18) into which inlets (26₁,26₂,26₃,34A₁,34A₂,34B₁, 34B₂) directed towards each chamber (12₁,12₂,12₃) open, a flexible sealing ring (30,40) further being provided in an annular groove (28) on the circumference of the insert (4,46) or in the recess (18) in the second housing part (16,36), said sealing ring (30,40) acting as a non-return valve member and closing off the mouths (32₁,32₂,32₃) of the inlets (26₁,26₂,26₃,34A₁,34A₂,34B₁,34B₂) and being displaceable into the associated chamber (12₁,12₂,12₃) under pressure in the inlet (26₁,26₂,26₃) to allow flow into the corresponding connecting channel (10₁,10₂,10₃, 42A₁,42A₂,42B₁,42B₂).

2. Apparatus according to claim 1, characterised in that the dimension (D₁) of the sealing ring (30,40) in the axial direction of the insert (4,46) is larger than the corresponding dimension (D₂) of the mouth (32₁,32₂,32₃) of the inlet (26₁,26₂,26₃,34A₁,34A₂,34B₁,34B₂) but smaller than the corresponding dimension of (D₃) of the connecting channel (10₁,10₂,10₃,42A₁,42A₂,42B₁,42B₂).

3. Apparatus according to claim 1 or 2, characterised in that the sealing ring (30,40) is an O-ring.

4. Apparatus according to one of claims 1 to 3, characterized in that each chamber (12₁,12₂,12₃) is formed by a recess in the insert (4,46) the edges (14) of which are preferably rounded in the circumferential direction.

5. Apparatus according to one of claims 1 to 4, characterized in that the insert has a prismatic cross section and co-operates with a correspondingly prismatic recess in the second housing part.

6. Apparatus according to one of claims 1 to 4, characterized in that the insert (4,46) has a circular cross section and co-operates with a correspondingly cylindrical recess (18) in the second housing part (16,36).

7. Apparatus according to one of claims 1 to 6, characterized in that the second housing part (36) has a prismatic periphery.

8. Apparatus according to one of claims 1 to 6, characterized in that the second housing part (16) has a cylindrical periphery.

9. Apparatus according to one of claims 1 to 8, characterized in that, in the housing (36,48), there is at least a second arrangement (A,B) for connecting at least two inlets (34A₁,34A₂,34B₁,34B₂), each containing a non-return valve (38A₁,38A₂,38B₁,38B₂), to a common outlet (44A,44B), the sealing ring (40) also acting as a non-return valve member for the second arrangement.

## Revendications

1. Dispositif avec au moins un agencement pour relier deux conduites d'amenée, contenant chacune un clapet antiretour, à une conduite de départ commune, caractérisé en ce que la conduite de départ (8, 44A, 44B) est disposée dans un corps d'insertion (4, 46) d'une première partie de boitier (2, 48) et est pour chaque conduite d'amenée (26₁, 26₂, 26₃, 34A₁, 34A₂, 34B₁, 34B₂) mise en liaison avec une chambre (12₁, 12₂, 12₃) située à la périphérie du corps d'insertion (4, 46), par l'intermédiaire d'un canal de liaison (10₁, 10₂, 10₃, 42A₁, 42A₂, 42B₁, 42B₂), tandis qu'à la périphérie du corps d'insertion (4, 46) est située une seconde partie de boitier (16, 36) avec un évidement (18) dans lequel débouchent les conduites d'amenée (26₁, 26₂, 26₃, 34A₁, 34A₂, 34B₁, 34B₂) dirigées vers chaque chambre, et qu'en outre, dans une gorge annulaire (28) située à la périphérie du corps d'insertion (4, 46) ou dans l'évidement (18) de la seconde partie de boîtier (16, 36) est disposé un anneau d'étanchéité (30, 40) élastique servant de clapet antiretour, refermant les embouchures (32₁, 32₂, 32₃) des conduites d'amenée (26₁, 26₂, 26₃, 34A₁, 34A₂, 34B₁, 34B₂), cet anneau d'étanchéité pouvant être repoussé dans la chambre associée (12₁, 12₂, 12₃) sous la pression régnant dans la conduite d'amenée (26₁, 26₂, 26₃), pour libérer le passage vers le canal de liaison correspondant (10₁, 10₂, 10₃, 42A₁, 42A₂, 42B₁, 42B₂).

2. Dispositif selon la revendication 1, caractérisé en ce que dans la direction de l'axe du corps d'insertion (4, 46), la dimension (D₁) de l'anneau d'étanchéité (30, 40) est plus grande que la dimension correspondante (D₂) de l'embouchure (32₁, 32₂, 32₃) de la conduite d'amenée (26₁, 26₂, 26₃, 34A₁, 34A₂, 34B₁, 34B₂), mais est plus petite que la dimension correspondante (D₃) du canal de liaison (10₁, 10₂, 10₃, 42A₁, 42A₂, 42B₁, 42B₂).

3. Dispositif selon la revendication 1 ou 2, caractérisé en ce que l'anneau d'étanchéité (30, 40) est un anneau torique.

4. Dispositif selon l'une des revendications 1 à 3, caractérisé en ce que chaque chambre (12₁, 12₂, 12₃) est formée par un évidement pratiqué dans le corps d'insertion (4, 46), et dont les bordures (14) sont de préférence arrondies.

5. Dispositif selon l'une des revendications 1 à 4, caractérisé en ce que le corps d'insertion présente une section transversale prismatique et coopère avec un évidement de forme prismatique correspondante de la seconde partie de boîtier.

6. Dispositif selon l'une des revendications 1 à 4, caractérisé en ce que le corps d'insertion (4, 46) présente une section transversale de forme circulaire et coopère avec un évidement (18) de forme cylindrique correspondante de la seconde partie de boîtier (16, 36).

7. Dispositif selon l'une des revendications 1 à 6, caractérisé en ce que la seconde partie de boîtier (36) présente un périmètre prismatique.

8. Dispositif selon l'une des revendications 1 à 6, caractérisé en ce que la seconde partie de boitier (16) présente un périmètre cylindrique.

9. Dispositif selon l'une des revendications 1 à 8, caractérisé en ce que dans le boîtier (36, 48) il existe au moins un second agencement (A, B) pour relier au moins deux conduites d'amenée (34A₁, 34A₂, 34B₁, 34B₂) contenant chacune un clapet antiretour (38A₁, 38A₂, 38B₁, 38B₂) à une conduite de départ (44A, 44B), l'anneau d'étanchéité (40) servant également de corps de clapet antiretour pour le second agencement.
